# EUROPEAN PATENT APPLICATION

(11) **EP 4 362 190 A1**
(43) Date of publication of application: **01.05.2024**
(21) Application number: 22848526.4
(22) Date of filing: 26.07.2022
(51) Int. Cl.: H01M 50/258, H01M 10/42

(54) **ENERGY STORAGE UNIT AND ENERGY STORAGE BATTERY**

(30) Priority: 28.07.2021 CN 202121741780 U
(71) Applicant: Trina Solar Co., Ltd, Changzhou, Jiangsu 213031 (CN)
(72) Inventor: YOU, Jiang, hangzhou, Jiangsu 213031 (CN); QIN, Feng, hangzhou, Jiangsu 213031 (CN); GAO, Jifan, hangzhou, Jiangsu 213031 (CN)
(74) Representative: Canzler & Bergmeier Patentanwälte Partnerschaft mbB
(86) International application number: PCT/CN2022/107903
(87) International publication number: WO 2023/005921

(57) **Abstract**

The present invention provides an energy storage unit and an energy storage battery. The energy storage unit comprises connecting structures and at least two battery modules; the at least two battery modules are stacked; at least one pair of opposite side end surfaces of every two adjacent battery modules are respectively provided with a connecting structure, and the connecting structure is configured to fasten and connect the two adjacent battery modules. In the energy storage unit and the energy storage battery provided by the present invention, convenience of disassembly and assembly of the energy storage unit can be improved, so that the energy storage unit can be disassembled and assembled more efficiently.

## Description

### TECHNICAL FIELD

The present disclosure relates to the technical field of batteries, and specifically relates to an energy storage unit and an energy storage battery.

### BACKGROUND

With the application and development of photovoltaic power generation systems, household photovoltaic energy storage systems are increasingly applied by virtue of the advantages of both grid-tie and off-grid availability, grid-tie surplus electricity fed back to the grid, autonomous supply of electricity at night and on rainy days, and the like. In the household photovoltaic energy storage system, the battery system typically consists of a battery module and a control module, and common battery systems are mainly classified into an all-in-one cabinet type and a standalone module stack type. The standalone module stack type battery box has the advantages of small volume and light weight, convenient transportation, installation and maintenance, small footprint, easy installation by a single person without a crane or a fork truck, easy capacity expansion and upgrading in later stages, and the like. Therefore, various kinds of modularly assembled batteries have emerged in the existing art.

For example, CN206099077U discloses a power cabinet, which solves the problem of modular assembly of batteries, but causes the following problems in practical use:
1. a locking device has to be pre-installed in the box, which involves a higher cost and a higher requirement on the installation accuracy of multiple products, thereby hindering mass production and maintenance;
2. after the whole battery system is installed in a stacked manner, if a single lower battery box component requires maintenance, an upper battery box component has to be removed to uncap and perform the maintenance; and
3. the handle of the box is exposed to the outside, so a weld of the handle is also exposed in long term, leading to the risk of rusting and affecting an overall artistic appearance of the product.

For another example, CN209447901U discloses a stacked battery pack, which can also solve the problem of modular assembly of batteries, but causes the following problems in practical use:
1. the external fixing device is an integral structure so that different connecting plates or rods are required for different battery capacity configurations, and due to an accumulative error in the stacked structure, there is a tolerance requirement for part processing and assembly, leading to inconvenient in-site installation and maintenance, and inconvenient system expansion in a later stage;
2. after the whole battery system is installed in a stacked manner, if a single lower battery box component requires maintenance, an upper battery box component has to be removed to uncap and perform the maintenance; and
3. the handle of the box is exposed to the outside, so a weld of the handle is also exposed in long term, leading to the risk of rusting and affecting an overall artistic appearance of the product.

Therefore, the two technical solutions in the existing art both have some problems causing inconvenience in practical use..

### SUMMARY

To solve at least one of the technical problems in the existing art, the present disclosure provides an energy storage unit and an energy storage battery, which can improve the convenience in assembly and disassembly of the energy storage unit, so that the energy storage unit can be assembled and disassembled more efficiently.

A first object of the present disclosure is to provide an energy storage unit that can solve the technical problem of increasing the convenience and efficiency in assembly and disassembly of the energy storage unit.

A second object of the present disclosure is to provide an energy storage battery that can solve the technical problem of increasing the convenience and efficiency in assembly and disassembly of the energy storage battery.

The energy storage unit of the present disclosure is implemented by:
an energy storage unit, including a connecting structure and at least two battery modules, wherein the at least two battery modules are stacked, and at least one pair of opposite side end faces in each of every two adjacent battery modules are provided with the connecting structure respectively, and the connecting structure is configured to fasten and connect the two adjacent battery modules.

In an optional embodiment of the present disclosure, the connecting structure includes a connecting plate and fasteners configured to fasten and connect the connecting plate to the battery modules.

In an optional embodiment of the present disclosure, each fastener is provided with external threads, the side end face of each battery module is provided with a threaded hole matched with the external threads on the fastener, and the connecting plate is provided with a connecting hole through which the fastener passes.

In an optional embodiment of the present disclosure, the connecting plate is connected to side end faces of the battery modules in a width direction.

In an optional embodiment of the present disclosure, a recessed handle slot is provided on the side end face of each battery module.

In an optional embodiment of the present disclosure, the connecting plate covers the handle slot when connected to the two adjacent battery modules.

In an optional embodiment of the present disclosure, an adapted first electrical connecting structure is provided between two opposite end faces of every two adjacent battery modules, and configured to electrically connect the two adjacent battery modules.

In an optional embodiment of the present disclosure, an adapted first limit structure is provided between two opposite end faces of every two adjacent battery modules, and configured to limit relative positions of the two adjacent battery modules.

The energy storage battery of the present disclosure is implemented by:
an energy storage battery, including: a base, a control module, and the energy storage unit of the present disclosure, wherein the base and the control module are disposed at two ends of the energy storage unit, respectively.

In an optional embodiment of the present disclosure, the base is fastened and connected to an adjacent battery module through the connecting structure.

In an optional embodiment of the present disclosure, the control module is fastened and connected to an adjacent battery module through the connecting structure.

In an optional embodiment of the present disclosure, an adapted second electrical connecting structure is provided between the base and the adjacent battery module, and configured to electrically connect the base to the adjacent battery module.

In an optional embodiment of the present disclosure, an adapted third electrical connecting structure is provided between the control module and the adjacent battery module, and configured to electrically connect the control module to the adjacent battery module.

In an optional embodiment of the present disclosure, an adapted second limit structure is provided between the base and the adjacent battery module, and configured to limit relative positions of the base and the adjacent battery module.

In an optional embodiment of the present disclosure, a third limit structure is provided between the control module and the adjacent battery module, and configured to limit relative positions of the control module and the adjacent battery module.

Compared with the existing art, the present disclosure has the following beneficial effects:
in the energy storage unit of the present disclosure, for battery modules arranged in a stacked manner, by providing a connecting structure on at least one pair of opposite side end faces in each of every two adjacent battery modules respectively, the two adjacent battery modules can be fastened and connected through the connecting structure, which can not only facilitate convenient assembly of a plurality of battery modules when the plurality of battery modules are assembled, but also allow, when some of the battery modules needs overhaul and maintenance, to remove only the connecting structures connected to the battery modules needing overhaul and maintenance rather than all the battery modules, so that the plurality of battery modules in the energy storage unit are only locally disassembled to implement the overhaul and maintenance of a battery module 300 needing overhaul and maintenance, which can facilitate convenient disassembly of the battery modules in overhaul and maintenance, and thus more efficient assembly and disassembly of the energy storage unit.

According to the energy storage battery provided in the present disclosure, the convenience in assembly and disassembly of the energy storage unit can be improved by means of the energy storage unit of the present disclosure, so that the energy storage unit can be assembled and disassembled more efficiently, the convenience in assembly and disassembly of the energy storage battery can be improved, and the energy storage battery can be assembled and disassembled more efficiently.

### BRIEF DESCRIPTION OF DRAWINGS

FIG. 1 shows a schematic structural diagram of an energy storage unit and an energy storage battery in an optional implementation according to an embodiment of the present disclosure;
FIG. 2 shows a schematic structural diagram of an energy storage unit and an energy storage battery in another optional implementation according to an embodiment of the present disclosure;
FIG. 3 shows an exploded structural view corresponding to FIG. 2;
FIG. 4 shows a schematic structural diagram of FIG. 2 from another perspective;
FIG. 5 shows a schematic structural diagram of an energy storage unit and an energy storage battery in yet another optional implementation according to an embodiment of the present disclosure;
FIG. 6 is a schematic structural diagram of a battery module used in an energy storage unit and an energy storage battery according to an embodiment of the present disclosure from a first perspective;
FIG. 7 is a schematic structural diagram of a battery module used in an energy storage unit and an energy storage battery according to an embodiment of the present disclosure from a second perspective;
FIG. 8 is a schematic structural diagram of a battery module used in an energy storage unit and an energy storage battery according to an embodiment of the present disclosure from a third perspective; and
FIG. 9 is a schematic structural diagram of a control module used in an energy storage battery according to an embodiment of the present disclosure.

### List of reference numerals:

1 - bulge; 2 - threaded hole; 3 - upper electrical connector; 5 - lower electrical connector; 6 - positioning hole; 100 - base; 200 - connecting plate; 201 - connecting hole; 300 - battery module; 301 - cover plate; 302 - handle slot; 306 - external boss; 500 - control module; 501 - control cover plate; 504 - display structure; 505 - external wiring groove; and 600 - screw.

### DETAIL DESCRIPTION OF EMBODIMENTS

To improve understanding of the technical solution of the present disclosure for those skilled in the art, the liner apparatus and the semiconductor processing device provided in the embodiments of the present disclosure will be described in detail below in conjunction with the accompanying drawings. These drawings are all simplified schematic structural diagrams that merely schematically illustrate the basic structure of the present disclosure, and thus only show compositions related to the present disclosure.

### Embodiment 1:

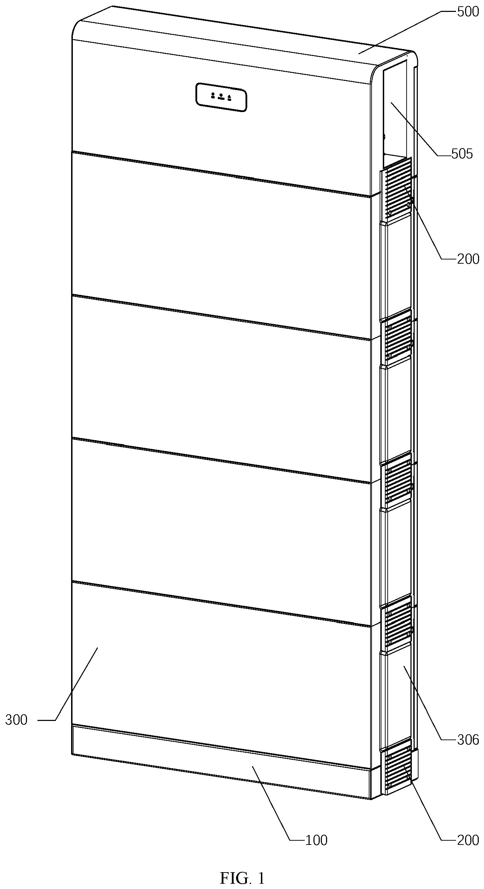

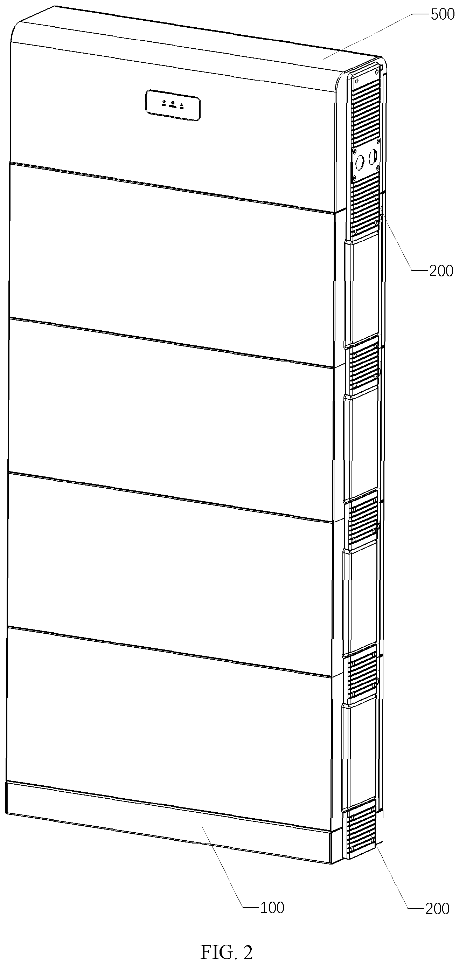

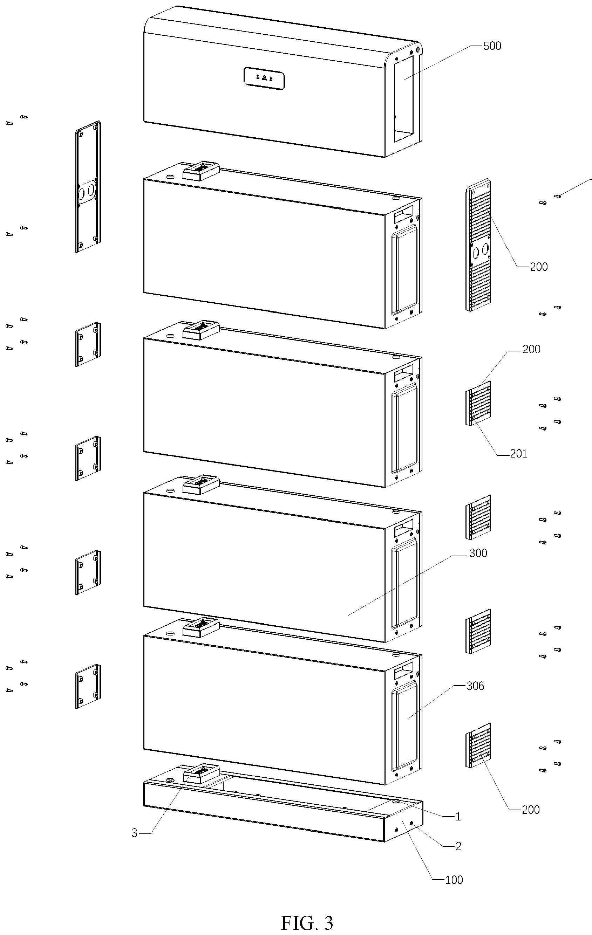

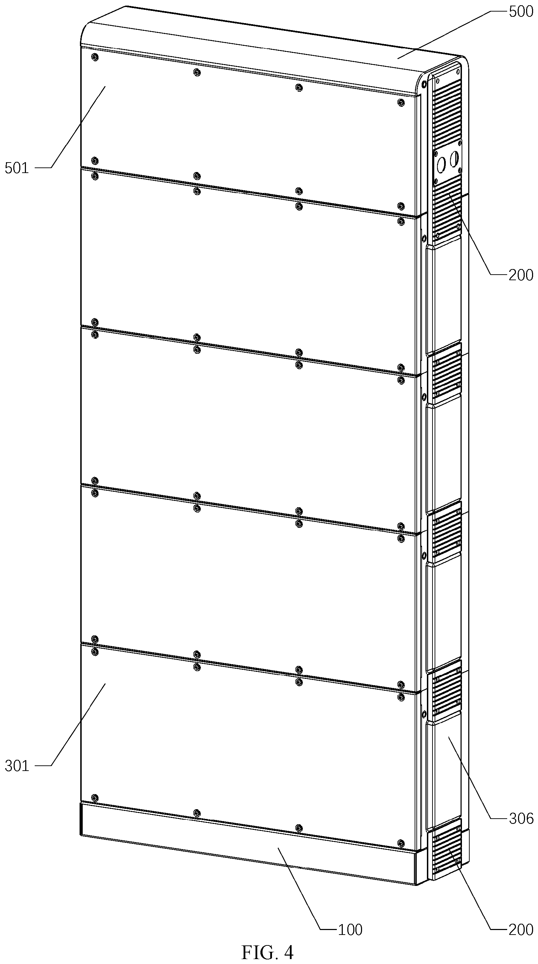

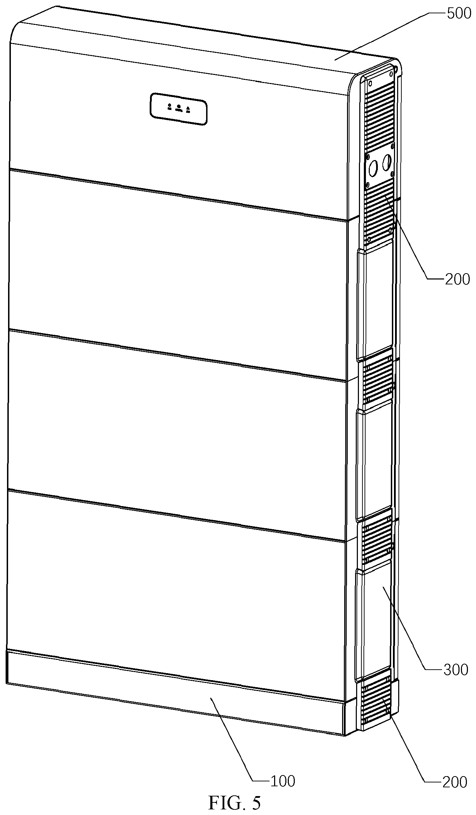

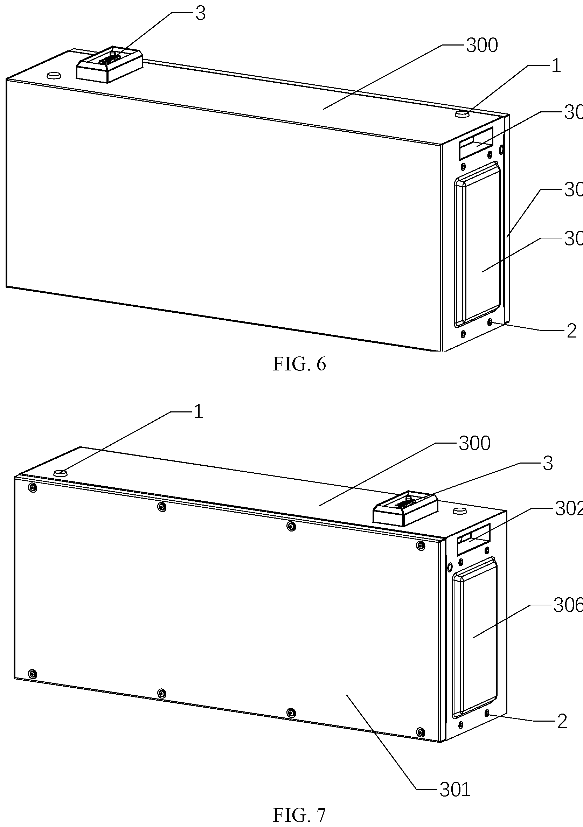

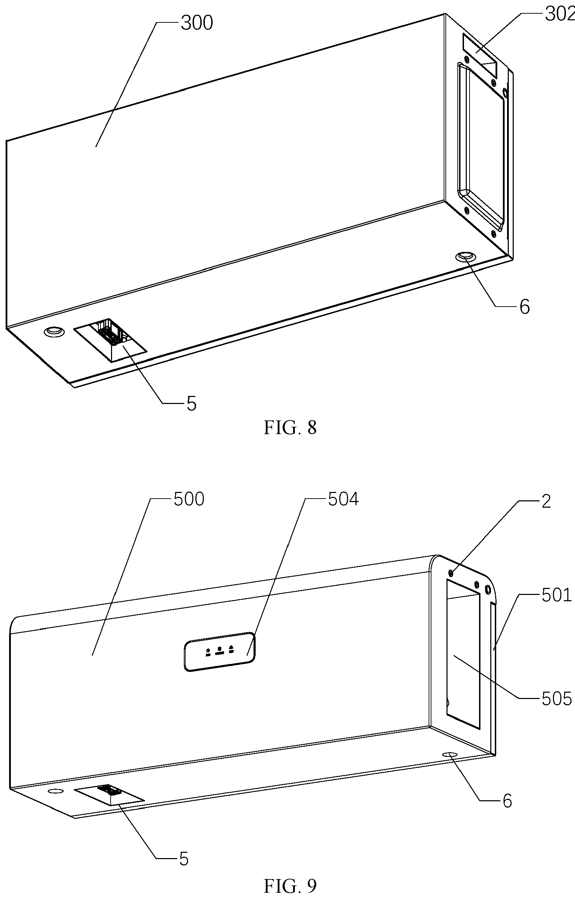

Referring to FIGs. 1 to 8, this embodiment provides an energy storage unit, including a connecting structure and at least two battery modules 300. The at least two battery modules 300 are stacked, at least one pair of opposite side end faces in each of every two adjacent battery modules 300 are provided with a connecting structure respectively, and the connecting structure is configured to fasten and connect the two adjacent battery modules 300. In other words, every two adjacent battery modules 300 are fastened and connected by mating connection between at least one pair of opposite side end faces thereof, that is, at least one pair of opposite side end faces in each of every two adjacent battery modules 300 are fastened and connected by a connecting structure, so that every two adjacent battery modules 300 are fastened and connected.

In the energy storage unit provided in the embodiment of the present disclosure, for battery modules 300 arranged in a stacked manner, by providing a connecting structure on at least one pair of opposite side end faces in each of every two adjacent battery modules 300, the two adjacent battery modules 300 can be fastened and connected through the connecting structure, which can not only facilitate convenient assembly of a plurality of battery modules 300 when the plurality of battery modules are assembled, but also allow, when some of the battery modules 300 needs overhaul and maintenance, to remove only the connecting structures connected to the battery modules 300 needing overhaul and maintenance rather than all the battery modules 300, so that the plurality of battery modules 300 in the energy storage unit are only locally disassembled to implement the overhaul and maintenance of a battery module 300 needing overhaul and maintenance, which can facilitate convenient disassembly of the battery modules 300 in overhaul and maintenance, and thus more efficient assembly and disassembly of the energy storage unit.

Based on the consideration of the assembly efficiency and the cost of the overall structure, in combination with the drawings of the embodiment, the connecting structure may be used to implement the connection between only one pair of opposite side end faces in each of every two adjacent battery modules 300, that is, only one pair of opposite side end faces in each of every two adjacent battery modules 300 are fastened and connected by the connecting structure, so that the number of connecting structures can be reduced, the assembly efficiency of every two adjacent battery modules 300 can be improved, and the cost of the overall structure of the energy storage unit can be reduced.

For example, in the case of three battery modules 300 stacked longitudinally, from bottom to top, a portion of a lowermost battery module 300 close to the top is connected to a portion of an intermediate battery module 300 close to the bottom by the connecting structure, to implement tight fit and fixation of the two battery modules 300. Furthermore, the intermediate battery module 300 is fixedly fitted and connected by the connecting structure connecting a portion of the intermediate battery module close to the top to a portion of the uppermost battery module 300 close to the bottom, so that the tight fit and fixation of the intermediate battery module 300 and the top battery module 300 is accomplished. In other words, the three battery modules 300 are stacked in the longitudinal direction, where connecting structures fasten and connect the intermediate battery module 300 and the top battery module 300 at one pair of opposite side end faces of the intermediate battery module 300 close to the top and one pair of side end faces of the top battery module 300 close to the bottom, while connecting structures fasten and connect the intermediate battery module 300 and the bottom battery module 300 at one pair of opposite side end faces of the intermediate battery module 300 close to the bottom and one pair of side end faces of the bottom battery module 300 close to the top. In conclusion, the overall fixation of the three battery modules 300 longitudinally stacked is achieved through the above-described process. In other words, for the energy storage unit of this embodiment, regardless of the number of battery modules 300 in the energy storage unit, a connecting structure is only provided between every two adjacent battery modules 300, which can facilitate capacity expansion or reduction of the energy storage unit according to the actual requirement in the specific process.

However, the at least two battery modules 300 are not limited to being stacked longitudinally.

For this embodiment, the connecting structure may include a connecting plate 200 and fasteners configured to fasten the connecting plate 200 to the battery modules 300. It should be noted here that the specific shape of the connecting plate 200 is not limited absolutely in this embodiment, which may be a flat plate shape, or may conform to a specific shape of the side end face of the battery module 300 connected to the connecting plate 200. In other words, the shape of the connecting plate 200 may be adjusted according to the connected side end face of the battery module 300, so that two adjacent battery modules 300 can be fastened and connected by the connecting plate 200 by simply modifying the connecting plate 200 without changing the battery module 300, which can minimize modifications to the battery module 300 itself while achieving the effect of connecting a plurality of battery modules 300.

As an optional implementation, in consideration of convenient and efficient disassembly, the fastener of the present embodiment may include a screw 600. On the basis of this structure and in consideration of engagement with the fasteners, a threaded hole 2 matched with the screw 600 is provided on the side end face of the battery module 300, while a connecting hole 201 for passage of the screw 600 is provided on the connecting plate 200. In practical applications, the connecting plate 200 can be fastened and connected to the battery module 300 by the screw 600 by passing the screw 600 through the connecting hole 201 to be threadedly fitted into the threaded hole 2.

However, the type of the fastener is not limited to the screw 600. For example, it is also possible that the fastener is provided with external threads, the side end face of the battery module 300 is provided with a threaded hole 2 matched with the external threads on the fastener, and the connecting plate 200 is provided with a connecting hole 201 through which the fastener passes. In practical applications, the connecting plate 200 can be fastened and connected to the battery module 300 by the fastener by passing the fastener through the connecting hole 201 and matching the external threads of the fastener with the threads in the threaded hole 2.

For the energy storage unit provided in the embodiment of the present disclosure, fastened connection of adjacent battery modules 300 can be implemented by simply matching the connecting plate 200 with the fastener, which is simple in structure, involves relatively low overall cost of material and assembly, and only needs a design, such as the threaded hole 2 in the embodiment of the present disclosure, on the battery module 300 that can be matched with the fastener. In this case, the structure of the battery modules 300 itself is less changed, i.e., excessive cost on improving the structure of the battery modules 300 itself is saved, so that the overall cost of the energy storage unit provided in the embodiment of the present disclosure can be controlled relatively low.

It should be further noted that the battery module 300 of this embodiment has a cuboid structure, with four longitudinal side end faces in two pairs, one pair corresponding to a length direction of the battery module 300, and the other pair corresponding to a width direction of the battery module 300. On the basis of this structure, when connecting structures are provided on only one pair of side end faces, in view of cost saving, the connecting structures of the embodiment may be installed on the pair of longitudinal side end faces of the battery module 300 corresponding to the width direction. That is, when the battery module 300 has multiple pairs of side end faces of different lengths and the connecting structures are connected to only one pair of side end faces, the connecting structures are selected to be connected to the pair of shorter side end faces, so that the length of the connecting plate 200 can be reduced. Therefore, the stacked battery module 300 is fixed, the material for the connecting plate 200 is saved, and thus the material cost is reduced.

However, the shape of the battery module 300 is not limited to the cuboid shape.

On the basis of the above structure, to further improve the firmness and stability of the longitudinally stacked battery modules 300 in the stacked state, in an optional implementation, an adapted first limit structure is provided between the two opposite end faces of every two adjacent battery modules 300, and configured to limit relative positions of the two adjacent battery modules 300. Taking a first limit structure as an example and referring to the figures, in two adjacent battery modules 300, a bulge 1 is provided on an end face of a lower battery module 300 opposite to an upper battery module 300, while a positioning hole 6 matched with the bulge 1 is provided on an end face of the upper battery module 300 opposite to the lower battery module 300. In practical applications, when the upper battery module 300 is stacked on the lower battery module 300, the bulge 1 is inserted into the positioning hole 6, so that relative positions of the two adjacent battery modules 300 are limited by the bulge 1 and the positioning hole 6. In this case, for the same battery module 300 longitudinally stacked, the bulge 1 is provided on a top end face of the battery module 300, and the positioning hole 6 is provided on a bottom end face of the battery module 300. Apparently, positions of the bulge 1 and the positioning hole 6 can be exchanged, so that for the same battery module 300 longitudinally stacked, the positioning hole 6 is provided on the top end face of the battery module 300, and the bulge 1 is provided at the bottom end face of the battery module 300, which is not absolutely limited in this embodiment.

When the connecting structures are installed on the pair of longitudinal side end faces of the battery module 300 corresponding to the width direction, one of the pair of longitudinal side end faces of the battery module 300 corresponding to the length direction can be selected and set as a cover plate 301 of the battery module 300, so that when the battery module 300 needs to be overhauled and maintained, the cover plate 301 can be removed to implement the overhaul and maintenance of the battery module 300 needing overhaul and maintenance without being affected by the connecting structures, and therefore, overhaul and maintenance can be implemented without disassembling the energy storage unit with a plurality of stacked battery modules 300.

Moreover, for the energy storage unit of this embodiment, it should be further noted that a recessed handle slot 302 may be provided on an outer sidewall of the battery module 300, and used for transportation operations of production installation and logistics transportation. As an optional implementation referring to the figures, the handle slot 302 may be disposed on a side end face of the battery module 300 matched with the connecting structure, and after the connecting plate 200 is connected to two adjacent battery modules 300, the connecting plate 200 may cover the handle slot 302, so that on the one hand, a weld of the handle can be effectively protected, and on the other hand, the overall aesthetic appearance of the energy storage unit can be improved. However, the specific outer sidewall in which the handle slot 302 is provided on the battery module 300 is not absolutely limited in the embodiment. For example, the handle slot 302 may be provided on one of the pair of longitudinal side end faces of the battery module 300 corresponding to the length direction without the cover plate 301.

In addition, in an optional implementation, in the energy storage unit of this embodiment, an external boss 306 may be provided on a longitudinal side end face of the battery module 300 corresponding to the width direction, so as to increase the strength of the side end face of the battery module 300. On the basis of this structure, the external boss 306 may avoid the connecting plate 200, or may be covered by the connecting plate 200 after the connecting plate 200 is connected to the two adjacent battery modules 300, and for the latter, a structure having a shape conforming to the external boss 306 may be prefabricated on the connecting plate 200 to meet the use requirement. However, the drawings of the embodiment merely take a structure in which the connecting plate 200 and the external boss 306 are separated from each other and exist independently as an example, that is, a structure in which the external boss 306 avoids the connecting plate 200, but do not form any absolute limitation.

Finally, for the energy storage unit of this embodiment, it should be further noted that an adapted first electrical connecting structure is provided between the two opposite end faces of every two adjacent battery modules 300, and configured to electrically connect the two adjacent battery modules 300, so as to electrically connect every two adjacent battery modules 300. For a first electrical connecting structure and referring to the figures, an upper electrical connector 3 is provided on an end face of a lower battery module 300 opposite to an upper battery module 300, while a lower electrical connector 5 matched with the upper electrical connector 3 is provided on an end face of the upper battery module 300 opposite to the lower battery module 300. In practical applications, when the upper battery module 300 is stacked on the lower battery module 300, the upper electrical connector 3 is electrically connected with the lower electrical connector 5, so that two adjacent battery modules 300 are electrically connected by the upper electrical connector 3 and the lower electrical connector 5. In this case, for the same battery module 300 longitudinally stacked, the upper electrical connector 3 is provided on a top end face of the battery module 300, and the lower electrical connector 5 is provided on a bottom end face of the battery module 300.

### Embodiment 2:

Referring to FIGs. 1 to 9, on the basis of the energy storage unit of embodiment 1, this embodiment further provides an energy storage battery, including: a base 100, a control module 500, and the energy storage unit of embodiment 1, where the base 100 and the control module 500 are disposed at two ends of the energy storage unit, respectively.

In the energy storage battery provided in the embodiment of the present disclosure, by means of the energy storage unit provided in the embodiment of the present disclosure, the convenience in assembly and disassembly of the energy storage unit can be improved, so that the energy storage unit can be assembled and disassembled more efficiently, the convenience in assembly and disassembly of the energy storage battery can be improved, and the energy storage battery can be assembled and disassembled more efficiently.

For example, the base 100 may be connected to a bottom of a lowermost battery module 300 in the energy storage unit, and the control module 500 may be connected to a top of an uppermost battery module 300 in the energy storage unit, so that the base 100 and the control module 500 are disposed at two ends of the energy storage unit, respectively.

Optionally, the base 100 may be fastened and connected to an adjacent battery module 300 through the connecting structure; and the control module 500 may be fastened and connected to an adjacent battery module 300 through the connecting structure. It should be noted that, in an optional implementation, the connecting structure for the fastened connection between the base 100 and the energy storage unit, and the connecting structure for the fastened connection between the control module 500 and the energy storage unit, may be the same as the connecting structure of embodiment 1. In addition, the specific positions of the specific connecting structures on the control module 500 and the base 100 can also refer to that on the energy storage unit, that is, on the longitudinal side end faces of the control module 500 and the base 100 corresponding to the width direction.

In another optional implementation, an inwardly recessed external wiring groove 505 may be provided on a side end face of the control module 500 fastened and connected to the connecting structure, and used for external connection operation and electrical connection of the energy storage battery. In consideration of covering the external wiring groove 505 when not used, the size of the connecting plate 200 for fastening and connecting the control module 500 and the energy storage unit can be increased. In other words, the connecting plate 200 for fastening and connecting the control module 500 and the battery module 300 adjacent to the control module 500 has a larger size than the connecting plate 200 for fastening and connecting every two adjacent battery modules 300.

For the control module 500 of this embodiment, it should be further noted that one longitudinal side end face of the pair of longitudinal side end faces of the control module 500 corresponding to the length direction can be selected and set as a control cover plate 501 of the control module 500 for installation and later maintenance of the energy storage battery. In other words, when the control module 500 needs to be overhauled and maintained, the overhaul and maintenance of the control module 500 can be implemented by removing the control cover plate 501 without being affected by the connecting structures; and a display structure 504 that displays an operating state of the energy storage battery may be provided on the other longitudinal side end face of the pair of longitudinal side end faces of the control module 500 corresponding to the length direction.

It should be further noted that, in this embodiment, an adapted second electrical connecting structure may be provided between the base 100 and an adjacent battery module 300, and an adapted third electrical connecting structure may be provided between the control module 500 and an adjacent battery module 300. Here, the second and third electrical connecting structures may be similar to the first electrical connecting structure of embodiment 1, and thus are not described in detail here. However, since the control module 500 is located on the top of the energy storage battery, only a lower electrical connector 5 matched with the uppermost battery module 300 in the energy storage unit is desired to be provided at the bottom of the control module 500, while the upper electrical connector 3 on the top of the control module 500 is omitted; and since the base 100 is located at the bottom of the energy storage battery, only an upper electrical connector 3 matched with the lowermost battery module 300 in the energy storage unit is desired to be provided on the top of the base 100, while the lower electrical connector 5 at the bottom of the base 100 is omitted.

On the basis of the above structure and in view of further improving the firmness and stability of the energy storage battery in use, in an optional implementation, a second limit structure may be provided between the base 100 and the adjacent battery module 300, and a third limit structure may be provided between the control module 500 and the adjacent battery module 300. Here, the second and third limit structures maybe similar to the first limit structure of embodiment 1, and thus are not described in detail here. However, since the control module 500 is located on the top of the energy storage battery, only a positioning hole 6 matched with the uppermost battery module 300 in the energy storage unit is desired to be provided at the bottom of the control module 500, while the bulge 1 on the top of the control module 500 is omitted; and since the base 100 is located at the bottom of the energy storage battery, only a bulge 1 matched with the lowermost battery module 300 in the energy storage unit is desired to be provided on the top of the base 100, while the positioning hole 6 at the bottom of the base 100 is omitted.

In summary, with the energy storage unit and the energy storage battery provided in the embodiments of the present disclosure, the convenience in assembly and disassembly of the energy storage unit can be improved, so that the energy storage unit can be assembled and disassembled more efficiently. Further, in the energy storage unit and the energy storage battery provided in the embodiments of the present disclosure, fastened connection of adjacent battery modules 300 can be implemented by simply matching the connecting plate 200 with the fastener, which is simple in structure, involves relatively low overall cost of material and assembly, and only needs a design, such as the threaded hole 2 in the embodiment of the present disclosure, on the battery module 300 that can be matched with the fastener. In this case, the structure of the battery modules 300 itself is less changed, i.e., excessive cost on improving the structure of the battery modules 300 itself is saved, so that the overall cost of the energy storage unit provided in the embodiment of the present disclosure can be controlled relatively low.

It will be appreciated that the above implementations are merely exemplary implementations for the purpose of illustrating the principle of the present disclosure, and the present disclosure is not limited thereto. It will be apparent to one of ordinary skill in the art that various modifications and variations may be made without departing from the spirit or essence of the present disclosure. Such modifications and variations should also be considered as falling into the protection scope of the present disclosure.

In the description of the present disclosure, it is to be understood that the terms indicating orientations or positional relationships are based on the orientations or positional relationships shown in the drawings, and are merely used for facilitating and simplifying description of the present disclosure, instead of indicating or implying that the referred device or element is necessarily in a specific orientation, or constructed and operated in the specific orientation, and therefore, they should not be construed as limitations to the present disclosure.

In the present disclosure, unless expressly stated or limited otherwise, the terms "mounted", "connected", "connection", "secured", "fastened", and the like are to be construed broadly and encompass, for example, both fixed and removable connection, or integral connection; or mechanical or electrical connection; or direct connection, indirect connection via an intermedium, or internal communication or interaction between two elements. The specific meaning of the above terms in the present disclosure may be understood by those of ordinary skill in the art as the case may be.

In the description of the present disclosure, it should be noted that the terms "center", "upper", "lower", "left", "right", "vertical", "horizontal", "inner", "outer", "longitudinal", "top", "bottom", and the like indicate orientations or positional relationships based on the orientations or positional relationships shown in the drawings or orientations or positional relationships that the product in the present disclosure is conventionally placed in when used, and are merely used for facilitating and simplifying description of the present disclosure, instead of indicating or implying that the referred device or element is necessarily in a specific orientation, or constructed and operated in the specific orientation, and therefore, they should not be construed as limitations to the present disclosure. Furthermore, the terms "first," "second," "third," and the like are used solely to distinguish one from another, and are not to be construed as indicating or implying relative importance.

Furthermore, the terms "horizontal", "vertical", "overhang", "longitudinal" and the like do not imply that the components are absolutely horizontal or overhang, but may be slightly inclined. For example, "horizontal" merely means that the direction is more horizontal than "vertical", and does not mean that the structure must be perfectly horizontal, but may be slightly inclined.

In the present disclosure, unless expressly stated or limited otherwise, the first feature located above or below the second feature may include the case where the first feature and the second feature are in direct contact, or may include the case where the first feature and the second feature are not in direct contact, but in contact via an another feature therebetween. Also, the first feature located over, above or on the second feature includes the case where the first feature is directly above or obliquely above the second feature, or simply indicates that the first feature is at a higher level than the second feature. The first feature below, under or beneath the second feature includes the case where the first feature is directly below or obliquely below the second feature, or simply indicates that the first feature is at a lower level than the second feature.

## Claims

1. An energy storage unit, **characterized by** comprising a connecting structure and at least two battery modules, wherein the at least two battery modules are stacked, at least one pair of opposite side end faces in each of every two adjacent battery modules are provided with the connecting structure respectively, and the connecting structure is configured to fasten and connect the two adjacent battery modules.

2. The energy storage unit according to claim 1, **characterized in that** the connecting structure comprises a connecting plate and fasteners configured to fasten and connect the connecting plate to the battery modules.

3. The energy storage unit according to claim 2, **characterized in that** each fastener is provided with external threads, the side end face of each battery module is provided with a threaded hole matched with the external threads on the fastener, and the connecting plate is provided with a connecting hole through which the fastener passes.

4. The energy storage unit according to claim 2, **characterized in that** the connecting plate is connected to side end faces of the battery modules in a width direction.

5. The energy storage unit according to claim 2, **characterized in that** a recessed handle slot is provided on the side end face of each battery module.

6. The energy storage unit according to claim 5, **characterized in that** the connecting plate covers the handle slot when connected to the two adjacent battery modules.

7. The energy storage unit according to claim 1, **characterized in that** an adapted first electrical connecting structure is provided between two opposite end faces of every two adjacent battery modules, and configured to electrically connect the two adjacent battery modules.

8. The energy storage unit according to claim 1, **characterized in that** an adapted first limit structure is provided between two opposite end faces of every two adjacent battery modules, and configured to limit relative positions of the two adjacent battery modules.

9. An energy storage battery, **characterized in** comprising: a base, a control module, and the energy storage unit according to any one of claims 1 to 8, wherein the base and the control module are disposed at two ends of the energy storage unit, respectively.

10. The energy storage battery according to claim 9, **characterized in that** the base is fastened and connected to an adjacent battery module through the connecting structure.

11. The energy storage battery according to claim 9, **characterized in that** the control module is fastened and connected to an adjacent battery module through the connecting structure.

12. The energy storage battery according to claim 9 or 10, **characterized in that** an adapted second electrical connecting structure is provided between the base and the adjacent battery module, and configured to electrically connect the base to the adjacent battery module.

13. The energy storage battery according to claim 9 or 11, **characterized in that** an adapted third electrical connecting structure is provided between the control module and the adjacent battery module, and configured to electrically connect the control module to the adjacent battery module.

14. The energy storage battery according to claim 9 or 10, **characterized in that** an adapted second limit structure is provided between the base and the adjacent battery module, and configured to limit relative positions of the base and the adjacent battery module.

15. The energy storage battery according to claim 9 or 11, **characterized in that** an adapted third limit structure is provided between the control module and the adjacent battery module, and configured to limit relative positions of the control module and the adjacent battery module.
